# EUROPEAN PATENT SPECIFICATION

(11) **EP 2 891 539 B1**
(45) Date of publication and mention of the grant of the patent: **07.08.2019**
(21) Application number: 13833673.0
(22) Date of filing: 21.08.2013
(51) Int. Cl.: B24B 3/60, B23F 5/16, B24B 3/34, B23F 21/04

(54) **GRINDING METHOD FOR SKIVING CUTTER AND GRINDING DEVICE FOR SKIVING CUTTER**
SCHLEIFVERFAHREN FÜR SCHÄRFSCHNEIDER UND SCHLEIFVORRICHTUNG FÜR SCHÄRFSCHNEIDER
PROCÉDÉ ET DISPOSITIF DE MEULAGE POUR FRAISEUSE

(30) Priority: 30.08.2012 JP 2012190366
(43) Date of publication of application: 08.07.2015
(73) Proprietor: Aisin Seiki Kabushiki Kaisha, Kariya-shi Aichi 448-8650 (JP)
(72) Inventor: NAGATA, Eiri, Kariya-shi Aichi 448-8650 (JP)
(74) Representative: TBK
(86) International application number: PCT/JP2013/072302
(87) International publication number: WO 2014/034495

(56) References cited:
- DE-A1- 10 344 945
- JP-A- H04 300 150
- JP-A- S60 221 208
- JP-A- 2000 288 930
- JP-A- 2002 011 643
- JP-U- 3 102 568
- US-A- 3 324 604
- US-A- 4 993 194

## Description

The present invention relates to a method of grinding a cutter for skive-machining a work and relates also to a device for grinding the skive-machining cutter. More particularly, the invention relates to a technique of finishing a cutting blade portion of a skive-machining cutter.

Document JP 2012-045687 A discloses a mode of machining in which a ring-shaped work is rotated and a skive-machining cutter (a pinion cutter in this document) rotated in synchronism with this work is fed along a tooth-trace (tooth helix) direction of teeth to be formed in the work, thus effecting a tooth-cutting operation.

According to this JP 2012-045687 A, the skive-machining cutter is configured like a helical gear, and this skive-machining cutter and the work are rotated in synchronism. In association with this, a cutting operation proceeds with the cutting blade portion of the cutter engaging into the respective tooth grooves of the teeth to be formed in the work, thus realizing the machining.

As this skive-machining cutter is configured like a helical gear, the cutter can be manufactured by a similar operation used for a helical gear.

Document JP H07-112320 A discloses a method of gear-forming cutting capable of forming a helical gear also, in which there are provided a grindstone for grinding one face of a tooth groove of a teeth-formed work and a grindstone for grinding the other face of the tooth groove, and grinding operations are carried out with these grindstones.

Document US 4 993 194 A discloses grinding disks for profiling cylindrical worms. Here, three different grinding operations are performed at the same time for reasons simplifying the production. Thereby, the flanks, roots and crest sections are ground at the same time.

The cutting blade portion of a skive-machining cutter has a same shape as that of a helical gear, but differs therefrom in its function. For this reason, the respective portions of the skive-machining cutter corresponding respectively to a tooth tip, a tooth face, a tooth bottom, a tooth thickness, a tooth shape, and a tooth trace will be designated as a blade tip, a blade lateral face, a blade bottom, a blade thickness, a blade shape and a blade trace, respectively. Similarly, a tooth cutting at the time of a machining of a gear will be explained as a blade cutting in the case of the skive-machining cutter.

When a skive-machining cutter is manufactured, for instance, like the case of a gear, a turning operation is effected for shaping material into a cylindrical shape. Then, with a blade cutting operation of the cylindrical material (corresponding to a tooth cutting operation of a gear), a cutting blade portion in the form of a gear tooth is formed and then this is subjected to a heat treatment. Thereafter, a grinding operation using a grindstone is effected for grinding blade lateral faces, a blade bottom face, a blade tip face (corresponding to the tooth faces, the tooth bottom and the tooth tip, in the case of the gear).

With the skive-machining cutter, a protruding side thereof protruding along the rotational axis functions as the cutting blade portion, so the shape of the cutting blade portion formed like a gear tooth is reflected in the shape of a tooth to be formed in the work.

For the reason described above, it is required that the blade shape and the blade thickness of the cutting blade portion of the skive-machining cutter be finished with high precision. Further, in forming the blade lateral faces, the blade bottom face and the blade tip face, a grinding operation using a grindstone is effected generally. More specifically, as shown in Document JP H07-112320 A, by grinding one lateral face of the tooth faces and the other lateral face of the same with different grindstones, the tooth surface can be finished with higher precision.

In case two gears mesh each other, the respective tooth faces thereof come into contact with each other for force transmission. Therefore, the shapes of the tooth tip and the tooth bottom in which no contact occurs does not affect the force transmission. On the other hand, in the case of the skive-machining cutter, the shape of the cutting blade portion is reflected directly in the shape of the tooth in the work, so high precision is required in the shape of the region extending from the blade tip face to the blade lateral face.

In particular, in case the blade lateral face and the blade tip face of the cutting blade portion are formed in a simple manner, this may result in formation of a stepped portion at the boundary between the blade lateral face and the blade tip face, due to difference of their machining steps, and this stepped portion will appear in the shape of the gear of the work. Hence, this remains room for improvement in this respect. Moreover, in case such stepped portion is formed at the boundary between the blade lateral face and the blade tip face, there is possibility of the cutting blade portion being damaged by stress concentration at the time of cutting operation. Thus, there remains room for improvement in this regard also.

The object of the present invention is to configure rationally a method of grinding a cutter for skive-machining a work and a device for grinding the skive-machining cutter which method and device allow formation of a better gear with a cutting operation.

The object of the invention is achieved by a method according to claim 1 and by a device according to claim 5, respectively.

According to a characterizing feature of an inventive method, a method of grinding a skive-machining cutter having a plurality of cutting blade portions formed by forming a plurality of groove portions helically about a rotational axis in an outer circumference of a material so that the plurality of cutting blade portions are arranged at positions between respective adjacent pairs of the groove portions and radially about the rotational axis, the method comprises:
a first grinding step for grinding one of a pair of blade lateral faces facing the groove portion;
a second grinding step for grinding the other of the pair of blade lateral faces; and
a third grinding step for grinding a blade tip face in a region extending from the pair of blade lateral faces to a projecting side of the cutting blade portion;
wherein an order is set such that the third grinding step is effected after the first grinding step and the second grinding step; and
wherein in the third grinding step, a grinding operation is effected such that the blade tip face formed by grinding is formed steplessly continuous with the one blade lateral face formed by the first grinding step and the other blade lateral face formed by the second grinding step.

With the above-described method, one blade lateral face is ground by the first grinding step and the other blade lateral face is ground by the second grinding step. Thus, compared with a method in which the pair of blade lateral faces are ground by a single step, the pair of blade lateral faces can be formed individually with high precision. Thereafter, as the blade tip face is ground by the third grinding step, the blade tip face can be formed steplessly continuous with the leading side blade lateral face and the trailing side blade lateral face. Further, according to this method, the grinding operations of the grinding in the first grinding step and the grinding in the second grinding step can be effected individually. Thus, if a blade thickness (corresponding to the tooth thickness of a gear) is to be adjusted, this adjustment can be effected by the same technique as a lateral dislocation of a gear.

In particular, when a work is machined by a skive-machining cutter ground by the above method, it is possible to form tooth faces which are smoothly continuous with each other. Further, in the case of the arrangement in which a stepped portion is formed at the boundary between blade lateral faces and a blade tip face of a cutter, at the time of cutting, stress concentration will occur at the portion of this stepped portion, which can lead to such a damage as a "chipping" or the like. On the other hand, in the case of the cutter ground by the method of the present invention, no stepped portion is formed at the boundary between the blade lateral faces and the blade tip face, so that no stress concentration will occur at this portion; thus, the service life of the cutter can be extended.

Therefore, it has been made possible to configure a method of grinding a skive-machining cutter capable of forming a gear in a favorable manner by cutting and providing also an extended cutter service life.

In the present invention, the first grinding step employs a disc-like grindstone having a grinding face having a shape along the one blade lateral face and driven to rotate for the grinding operation and the second grinding step employs a disc-like grindstone having a grinding face having a shape along the other blade lateral face and driven to rotate for the grinding operation.

With the above, by the grinding operation associated with driving rotation of the first grindstone, a blade lateral face corresponding to its grinding face is formed and by the grinding operation associated with driving rotation of the second grindstone, a blade lateral face corresponding to its grinding face is formed. With this, it becomes also possible to form the pair of blade lateral faces in different shapes with even higher precision.

In the present invention, the third grinding step may employ a grindstone having a grinding face along the blade tip face and driven to rotate for the grinding operation; and the blade tip face formed by this third grindstone is formed continuous with the one blade lateral face formed by the first grindstone and the other blade lateral face formed by the second grindstone.

With the above, with the driving rotation of the third grindstone, a blade tip face corresponding to its grinding face is formed smoothly continuous with the pair of blade lateral faces. Thus, the blade tip face smoothly continuous with the pair of blade lateral faces can be formed with high precision.

In the present invention, the grinding operation of the blade lateral face may be effected by moving at least one of the first grindstone and the second grindstone toward a circumferential direction about the rotational axis by an amount needed for adjustment of blade thickness.

With the above, in grinding a blade lateral face of the skive-machining cutter, as at least one of the first grindstone and the second grindstone is moved relative to the skiving cutter in the circumferential direction about the rotational axis and an amount of this relative movement is set to an amount needed for blade thickness adjustment, there is realized adjustment of blade thickness (corresponding to tooth thickness of a gear).

This machining technique is same as the technique of a lateral dislocation of a gear which is effected when a tooth thickness of a gear is adjusted, so there is involved no change in the blade shape (corresponding to the tooth shape of the gear). In contrast, in case a grinding amount were increased by moving one of the first grindstone and the second grindstone closer to the rotational axis in the same manner as the lateral dislocation of a gear, this would lead to inconvenience of inadvertent change in the blade shape. On the other hand, in the case of the present invention, a required blade thickness is obtained without changing the blade shape, with utilization of the technique of lateral dislocation.

In the present invention, in the third grinding step, the grinding operation may be effected by buff or blast of shot peening material.

With the above, unlike grinding by a grindstone, the vicinity of a face to be ground is ground also. Thus, without effecting any special machining, the stepped portion at the boundary portion between the blade tip face formed by the grinding in the third grinding step and the blade lateral faces can be minimized for allowing the blade tip face and the blade lateral faces to be formed smoothly continuous with each other.

An inventive device comprises:
a cutter supporting section for a skive-machining cutter having a plurality of cutting blade portions formed by forming a plurality of groove portions helically about a rotational axis in an outer circumference of a material so that the plurality of cutting blade portions are arranged at positions between respective adjacent pairs of the groove portions and radially about the rotational axis;
a first grinding section for grinding one of a pair of blade lateral faces facing the groove portion with using a disc-like first grindstone having a grinding face having a shape along the one blade lateral face and driven to rotate for the grinding operation;
a second grinding section for grinding the other of the pair of blade lateral faces with using a disc-like second grindstone having a grinding face having a shape along the other blade lateral face and driven to rotate for the grinding operation;
a third grinding section for grinding a blade tip face in a region extending from the pair of blade lateral faces to a projecting side of the cutting blade portion; and
a controlling section adapted to control the device such that grinding operations by the first grinding section and the second grinding section are effected on the skive-machining cutter supported to the cutter supporting section and then a grinding operation is effected by the third grinding section for forming the blade tip face steplessly continuous with the one blade lateral face formed by the first grinding step and the other blade lateral face formed by the second grinding step.

With the above-described configuration, while the skive-machining cutter is supported to the cutter supporting section, one blade lateral face is ground by the first grinding section and the other blade lateral face is ground by the second grinding section. Thus, compared with a method in which the pair of blade lateral faces are ground simultaneously, the pair of blade lateral faces can be formed individually with high precision. Thereafter, as the blade tip face is ground by the third grinding section, the blade tip face can be formed steplessly continuous with the pair of blade lateral faces. Further, according to this configuration, the grinding operations of the grinding by the first grinding section and the grinding in the second grinding section can be effected individually. Thus, if a blade thickness (corresponding to the tooth thickness of a gear) is to be adjusted, this adjustment can be effected by the same technique as a lateral dislocation of a gear.

In particular, when a work is machined by a skive-machining cutter ground by the device having the above configuration, it is possible to form tooth faces which are smoothly continuous with each other. Further, in the case of the arrangement in which a stepped portion is formed at the boundary between blade lateral face and a blade tip face of a cutter, at the time of cutting, stress concentration will occur at the portion of this stepped portion, which can lead to such a damage as a "chipping" or the like. On the other hand, in the case of the cutter ground by the device of the present invention, no stepped portion is formed at the boundary between the blade lateral face and the blade tip face, so that no stress concentration will occur at this portion; thus, the service life of the cutter can be extended.

Therefore, it has been made possible to configure a grinding device for grinding a skive-machining cutter capable of forming a gear in a favorable manner by cutting and providing also an extended cutter service life.

### Brief Description of the Drawings

[Fig. 1] is a perspective view showing a cutter and a work at the time of a skive-machining,
[Fig. 2] is a section view showing the cutter and the work at the time of a skive-machining,
[Fig. 3] is a schematic showing a configuration of a grinding device,
[Fig. 4] is a view illustrating a manufacturing process of the cutter,
[Fig. 5] is a perspective view showing cutting blade portions of the cutter in enlargement,
[Fig. 6] is a section view showing the cutting blade portions of the cutter under roughly ground state thereof,
[Fig. 7] is a section view showing a ground state by a first grindstone,
[Fig. 8] is a section view showing a ground state by a second grindstone,
[Fig. 9] is a section view showing a state immediately before grinding by a third grindstone,
[Fig. 10] is a section view showing a ground state by the third grindstone,
[Fig. 11] is a section showing the cutter after grinding,
[Fig.12] is a section showing a grinding state by a "double-function" grindstone in a further embodiment (a), which does not form part of the invention, and
[Fig. 13] is a section showing a ground state by a third grindstone in the further embodiment (a).

### Modes of Embodying the Invention

Next, embodiments of the present invention will be explained with reference to the accompanying drawings.

### [General Description of Skive-Machining]

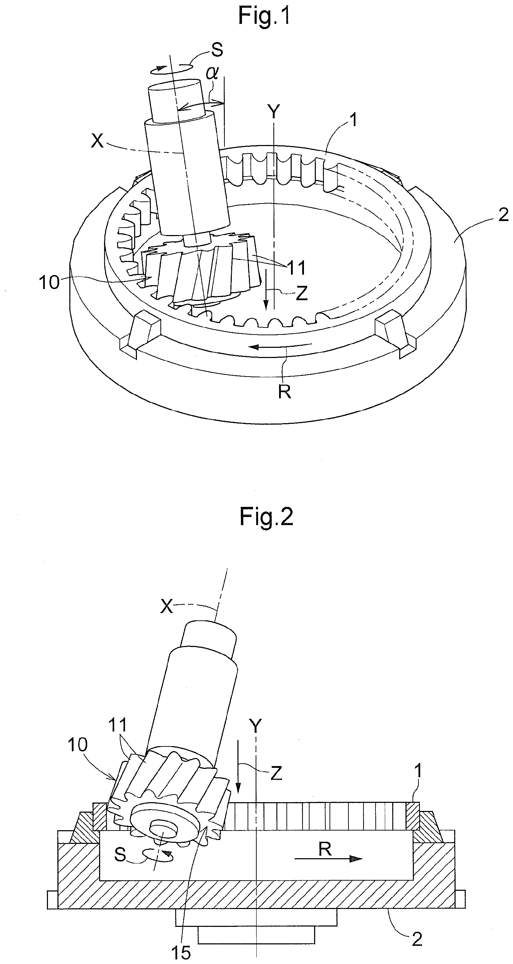

A skive-machining cutter (to be referred to as a "cutter 10" in short hereinafter) is for use in a skive-machining device shown in Fig. 1 and Fig. 2 for forming a flat internal gear by cutting an inner circumferential face of a ring-shaped work 1. This skive-machining device realizes its machining by operations similar to those disclosed in Japanese Unexamined Patent Application Publication No. 2012-45687 and Japanese Unexamined Patent Application Publication No. 2012-51049.

With this skive-machining device, the work 1 is supported to a table 2 which is rotated about a vertical axis Y and a cutter 10 is supported to be rotatable about a rotational axis X having a positional relationship offset from the vertical axis Y. The cutter 10 has, in its outer circumference, a plurality of cutting blade portions 11 like a helical gear. As the rotational axis X is tilted by a tilt angle α relative to the vertical axis Y, a blade trace (blade helix) direction of the cutting blade portion 11 to come into contact with the inner face of the work 1 is aligned with a tooth trace (tooth helix) direction of a tooth to be formed in the work 1.

More particularly, in order to allow the cutting blade portion 11 of the cutter 10 to come into contact with the inner circumferential face of the work 1 under a posture parallel with the vertical axis Y, this cutting blade portion 11 is formed like a helical gear tooth and the tilt angle α is set so as to create such relative posture as above.

Under the above-described condition, the work 1 is rotated in a main rotational direction R about the vertical axis Y and also the cutter 10 is rotated in a driven rotational direction S about the rotational axis X such that a moving rate of the inner circumference of the work 1 may be equal to a moving rate of the outer circumference of the cutting blade portions 11 of the cutter 10, and also the cutter 11 is moved in a shifting direction Z along the vertical axis Y. With these, a cutting operation is realized.

### [Features of Cutter]

As shown in Fig. 1, Fig. 2, Fig. 5, and Fig. 6, in the cutter 10, a plurality of groove portions 10A are formed helically about the rotational axis X in an outer circumference of a material so that the plurality of cutting blade portions 11 are formed at positions between respective adjacent pairs of the groove portions 10A. With this, the plurality of cutting blade portions 11 are formed radially about the rotational axis X and the cutter 10 obtains a gear-like cross sectional shape.

Further, of each cutting blade portion 11, portions thereof facing the pair of adjacent groove portions 10A will be designated as blade lateral faces 12 and a portion of the region of the cutting blade portion 11 located most distant from the rotational axis X and extending from the pair of blade lateral faces 12 toward their projecting sides will be designated as a blade tip face 13. Further, a blade bottom portion formed continuous from the pair of blade lateral faces 12 will be designated as a blade bottom face 14. Also, as a projecting side end portion of the cutter 10 in the direction along the rotational axis X is shaped substantially flat to be perpendicular to the rotational axis X, thus forming a cutting blade face 15. With this, by the edge at the boundary position between the pair of blade lateral faces 12 and the cutting blade face 15 and the edge at the boundary position between blade tip face 13 and the cutting blade face 15, a cutting operation is made possible.

Of the pair of blade lateral faces 12 of the cutter 10, one on the downstream side in the driven rotational direction S will be designated as the leading side and the other on the upstream side in the driven rotational direction S will be designated as the trailing side, respectively.
At the time of a cutting operation, the leading side blade lateral face 12 comes into contact with the work 1 before the trailing side blade lateral face 12. When thicknesses of cutting chips generated at the time of cutting operation, it can be confirmed that the cutting chips generated on the trailing side have greater thickness than the cutting chips generated eon the leading side.

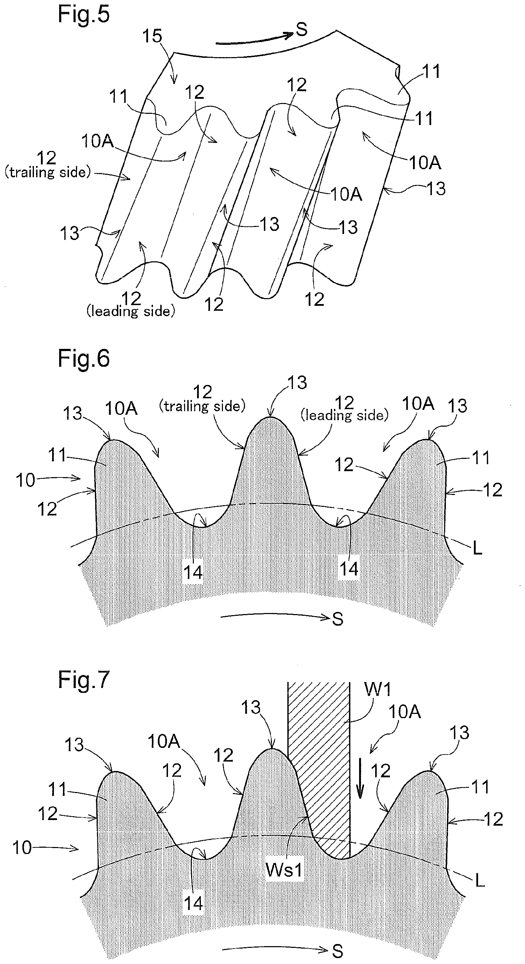

Further, as shown in Fig. 5, it may be understood that the blade bottom face 14 of the cutter 10 is not involved in cutting and the portions of the pair of blade lateral faces 12 closer to the blade bottom than a limit line L are not involved in cutting, either.

### [General Description of Manufacturing of Cutter]

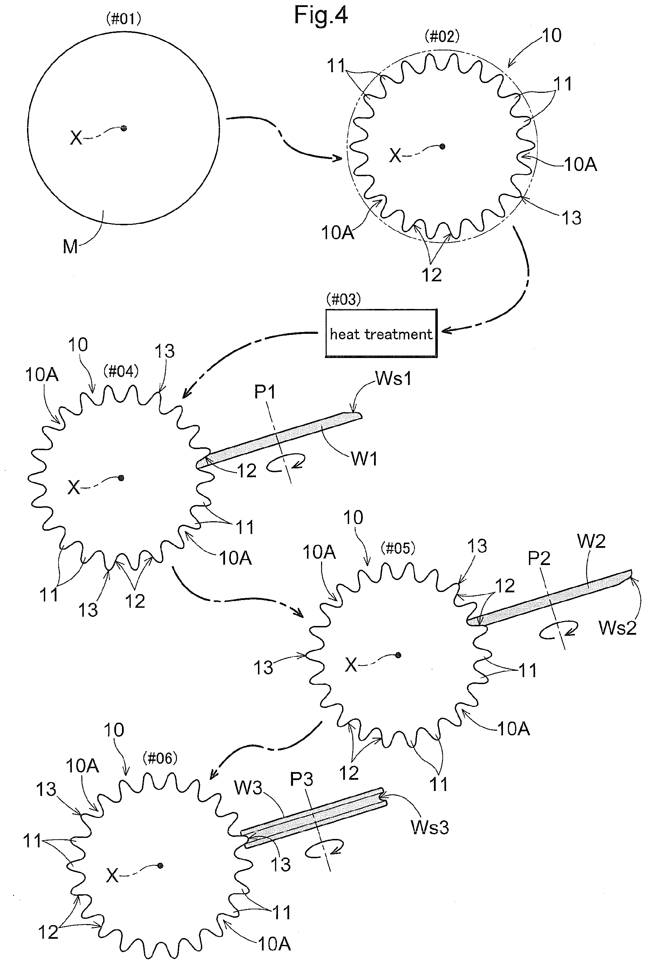

Fig. 4 shows an outline of a manufacturing process of the cutter 10. In this manufacturing process, as shown in the same figure, a material such as high-speed steel is turned on a turning lathe or the like to produce a blank M having a cylindrical shape about the rotational axis X (#01). Next, in an outer circumference of this cylindrically-shaped blank M, a grinding machining by a hob machine or the like is effected to form the plurality of groove portions 10A helically about the rotational axis X. With this, at positions between each adjacent pair of groove portions 10A, the plurality of cutting blade portions 11 are formed (#02). The cutter 10 formed in this way is at its roughly cut state, in which of each cutting blade portion 11, at position facing the groove portion 10A, the pair of blade lateral faces 12 are formed and at the portion extending to the projecting side of the cutting blade portion 11 (the portion distant from the rotational axis X), the blade tip face 13 is formed and at the end portion in the direction along the rotational axis X, the cutting blade face 15 is formed (see Fig. 5).

In this way, as the degree of involvement in the cutting can differ between the leading side blade lateral face 12 and the trailing side blade lateral face 12, the leading side blade lateral face 12 and the trailing side blade lateral face 12 are formed in non-symmetry. For this reason, in this manufacturing process, at the step #02, the leading side blade lateral face 12 and the trailing side blade lateral face 12 are reformed into symmetry and by a grinding operation subsequent thereto, these are finished into non-symmetry. Incidentally, at the time of grinding at step #02, the grinding operation can be effected alternatively to form the pair of blade lateral faces 12 into the non-symmetry.

Thereafter, the roughly cut cutter 10 is subjected to a heat treatment (#03). After this heat treatment, one of the pair of blade lateral faces 12 is ground by a first grindstone W1 (#04), and then the other of the pair of blade lateral faces 12 is ground by a second grindstone W2 (#05). Thereafter, the blade tip face 13 is ground by a third grindstone W3 (#06). Though not shown in this figure, during these steps or at the end thereof, grinding of the face of the cutting blade face 15 is effected, whereby the pair of blade lateral faces 12, the blade tip face 13 and the cutting blade face 15 are finished into predetermined shapes with high precision, thus completing the cutter 10. Further, the step #04 corresponds to what is designated as "a first grinding step" in the present invention, the step #05 corresponds to what is designated as "a second grinding step" in the present invention, and the step #06 corresponds to what is designated as "a third grinding step" in the present invention, respectively.

In the present embodiment, the order of grinding is set such that the step #04 (the first grinding step), the grinding operation of the leading side blade lateral face 12 of the cutting blade portion 11 is effected and at the step #05 (the second grinding step), the grinding operation of the trailing side blade lateral face 12 of the cutting blade portion 11 is effected. Incidentally, this order can be reversed. Further, in the present invention, the order of grinding can be set also such that the grinding operation at the step #04 (the first grinding step) and the grinding operation at the step #05 (the second grinding step) can be effected in alternation or that the grinding operation at the step #04 (the first grinding step) and the grinding operation at the step #05 (the second grinding step) are effected simultaneously.

In particular, when the grinding operations are effected at the step #04 and the step #05, adjustment of blade thickness is realized by moving one of the first grindstone W1 and the second grindstone W2 or both the first grindstone W1 and the second grindstone W2 in the circumferential direction about the rotational axis X relative to the roughly cut cutter 10, by an amount needed for this blade thickness adjustment. This mode of grinding is a technique identical to that of lateral dislocation in the case of adjustment of tooth thickness of a gear. and finishing to a required blade thickness is possible without changing the blade shape (corresponding to the tooth shape of the gear).

Incidentally, the grindstones described above are molded into a disc-shape by e.g. sintering of grinding gains having high hardness for grinding or binding them with a binder. As the grindstones, grindstones having suitable grain size values of grains for the sake of finishing smooth the cut machined faces by the hob lathe or the like.

### [Grinding Device]

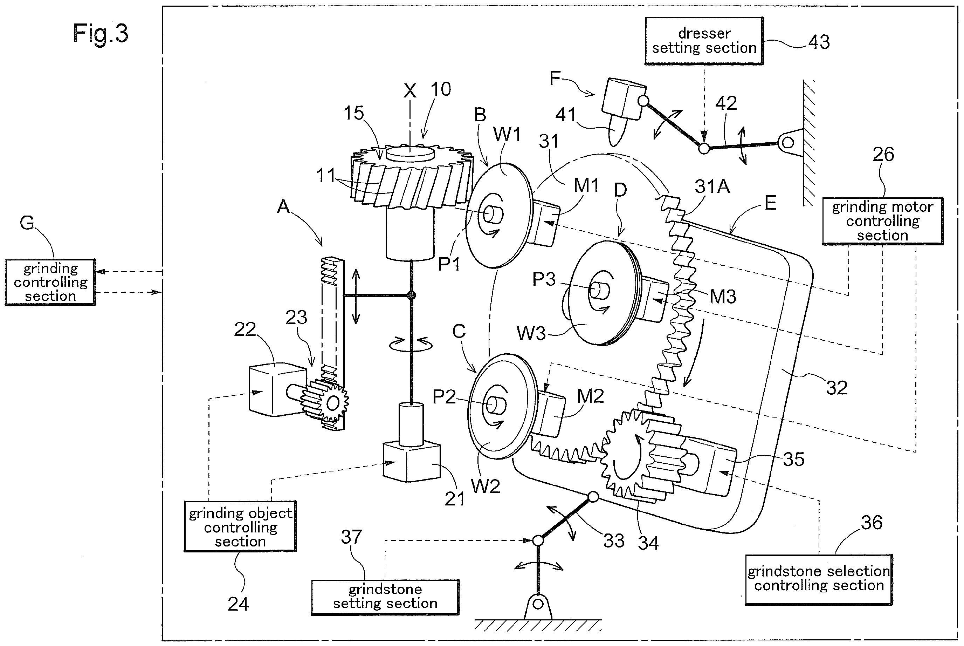

Fig. 3 schematically shows an inventive grinding device for the cutter 10. This grinding device is provided for realizing an inventive method of grinding the cutter 10 and, the device is configured to automatically carry out the operations of the steps #04 through #06 with setting the cutter 10 after the heat treatment thereto.

This grinding device includes a cutter supporting section A for supporting the roughly cut cutter 10, a first grinding section B for grinding one blade lateral face 12, a second grinding section C for grinding the other blade lateral face 12, a third grinding section D for grinding the blade tip face 13 of the cutting blade portion 11, a grinding operational section E, a dressing section F and a grinding controlling section G for controlling the above sections.

The cutter supporting section A supports the cutter 10 rotatably about the rotational axis X and includes an electric motor type rotational operational mechanism 21 for rotating the cutter 10 about this rotational axis X. The cutter supporting section A further includes a linear operational mechanism 23 for converting a drive force from an electric motor type rotational drive device 22 into a linear operational force for moving the cutter 10 along the rotational axis X.

This cutter supporting section A functions to rotate the cutter 10 about the rotational axis X at the time of grinding of the pair of blade lateral faces 12 or the blade tip face 13 and also to move the cutter 10 along the rotational axis X and this section A is controlled by a grinding object controlling section 24.

The first grinding section B includes the disc-like first grindstone W1 supported to be driven to rotate about a first drive axis P1 and an electric type first grinding motor M1 for rotatably driving this first grindstone W1. The second grinding section C includes the disc-like second grindstone W2 supported to be driven to rotate about a second drive axis P2 and an electric type second grinding motor M2 for rotatably driving this second grindstone W2. The third grinding section D includes the disc-like third grindstone W3 supported to be driven to rotate about a third drive axis P3 and an electric type third grinding motor M3 for rotatably driving this second grindstone W3.

The first grinding motor M1 of the first grinding section B, the second grinding motor M2 of the second grinding section C and the third grinding motor M3 of the third grinding section D are controlled by a grinding motor controlling section 26.

The first drive axis P1 of the first grindstone W1, the second drive axis P2 of the second grindstone W2, and the third drive axis P3 of the third grindstone W3 are set to postures parallel to each other. With this arrangement, the posture of the grindstone is set to a target posture whichever one of the first grindstone W1, the second grindstone W2 and the third grindstone W3 is selected by rotation of a supporting disc 31 as will be described later herein.

The grinding operational section E includes the supporting disc 31 of a turret type supporting the first grinding section B, the second grinding section C and the third grinding section D, a movable base 32 rotatably supporting the disc 31, and a base operational mechanism 33 for setting movement and angle of the movable base 32. A gear portion 31A is formed in the entire circumference of the outer circumference of the supporting disc 31 and the section E includes a selecting motor 35 for rotatably driving a pinion gear 34 meshed with this gear portion 31A. Further, the selecting motor 35 is controlled by a grindstone selection controlling section 36.

The base operational mechanism 33 has a function of effecting a translation movement of the movable base 32 so as to move the grindstone (generic designation of the first grindstone W1, the second grindstone W2 and the third grindstone W3) closer to or away from the cutter supporting section A and a further function of setting an angle at which the grindstone is to come into contact with the cutter 10. In the instant embodiment, the base operational mechanism 33 has a similar configuration to that of a robot hand. This base operational mechanism 33 includes a plurality of electric motors (not shown) for effecting the translation movement and the angle setting of the movable base 32 and these electric motors are controlled by a grindstone setting section 37.

The dressing section F includes a diamond dresser 41 and a dresser operational mechanism 42 for operating this diamond dresser 41. The dresser operational mechanism 42 is provided for effecting an operation of a truing (reshaping) of a grinding face of the grindstone and has a similar configuration to that of a robot hand. This dresser operational mechanism 42 includes a plurality of electric motors (not shown) for moving the diamond dresser 41 along a predefined track and these electric motors are controlled by a dresser setting section 43.

The grinding controlling section G includes a microprocessor or a DSP, etc. and stores in its memory data for implementing automated grinding operations and includes a program for executing a control operation based on this data in the memory. This grinding controlling section G controls the grinding object controlling section 24, the grinding motor controlling section 26, the grindstone selection controlling section 36, the grindstone setting section 37 and the dresser setting section 43.

### [Description of Control]

With this grinding device, at the time of non-control, the grindstone is maintained at its home position away from the cutter supporting section A and the diamond dresser 41 is maintained at its home position away from the grindstone. Further, at the time of this non-control, the cutter 10 is maintained at its home position away from a grinding position by the grindstone. Under this condition, as the control is initiated with the roughly cut cutter 10 after the heat treatment being supported to the cutter supporting section A, the grindstone selection controlling section 36 selects the first grindstone W1 as the grindstone needed for grinding and rotates the supporting disc 31 so as to move this first grindstone W1 closer to the cutter supporting section A.

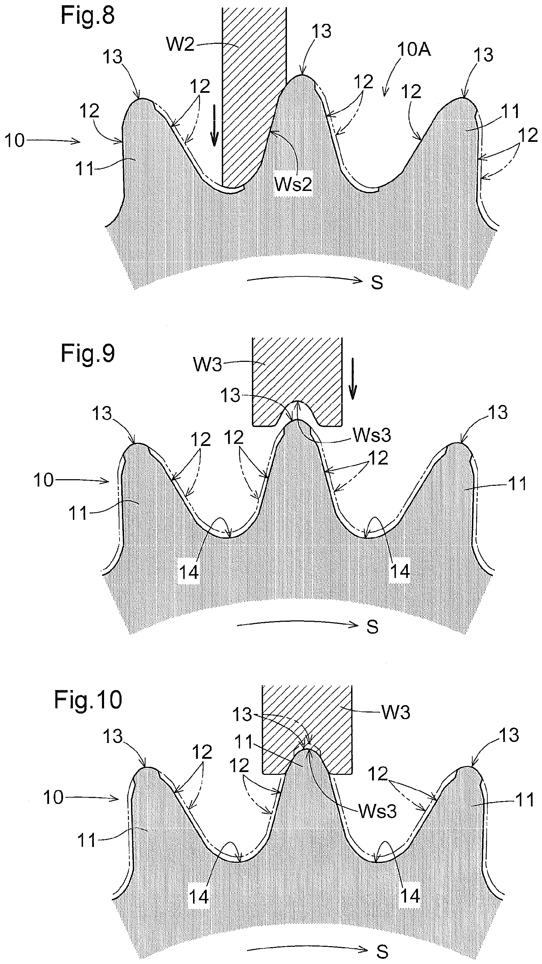

The first grindstone W1 includes, in its outer circumferential portion, a first grinding face Ws1 shown in Fig. 4 and Fig. 7 for finishing the leading side blade lateral face 12 into a predetermined shape. The second grindstone W2 includes, in its outer circumferential portion, a second grinding face Ws2 shown in Fig 4 and Fig. 8 for finishing the trailing side blade lateral face 12 into a predetermined shape. The third grindstone W3 includes, in its outer circumferential portion, a third grinding face Ws3 shown in Fig. 4 and Fig. 9 for finishing one of the blade tip faces 13 into a predetermined shape.

Next, the grindstone setting section 37 operates the movable base 32 to set an angle of the first drive axis P1 such that a virtual plane in which the outer circumferential face of the first grindstone W1 is present may assume a posture along a blade trace direction of the cutting blade portions 11 of the cutter 10 (posture corresponding to a twist angle of the cutting blade portions 11).

Though not shown in the figures, the cutter supporting section A is provided with a sensor for detecting the positions of the pair of blade lateral faces 12 and the blade tip face 13 of the cutting blade portions 11 of the cutter 10. Based on detection result of this sensor, the grinding object controlling section 24 sets the rotational posture of the cutter 10 to an initial posture which corresponds to grinding of the leading side blade lateral face 12.

Under this setting condition, the grinding motor controlling section 26 controls the first grinding motor M1 for initiating rotation of the first grindstone W1 and then the grindstone setting section 37 shifts the first grindstone W1 in the direction closer to the cutter 10. Further, simultaneously with this shifting, the grinding object controlling section 24 moves the cutter 10 in the direction of the rotational axis X and rotates the cutter 10 in synchronism therewith about the rotational axis X.

With the above operation, the first grinding face Ws1 of the first grindstone W1 comes into contact with the leading side blade lateral face 12 of the cutter 10 as shown in Fig. 7 and under this contacting condition, a grinding operation is effected on a region extending from one end portion to the other end portion in the blade trace direction. At the time of this grinding operation, the first grindstone W1 is present at the fixed position and the cutter 10 is rotated about the rotational axis X and also the cutter 10 is shifted in the direction of the rotational axis X, whereby the grinding operation in the region along the blade trace direction of the cutting blade portion 11 is effected.

This grinding operation needs to be effected for all the leading side blade lateral faces 12 of the plurality of cutting blade portions 11. Therefore, after completion of grinding of one blade lateral face 12, a grinding operation of another leading side blade lateral face 12 is effected.

Incidentally, as a mode of controlling to be executed at the time of grinding a plurality of leading side blade lateral faces 12, it is conceivable to effect grinding of a blade lateral face 12 by the first grindstone W1 from the lower side to the upper side thereof (from the lower end side to the upper end side in Fig. 3) and then to effect grinding of an adjacent leading side blade lateral face 12 from the upper side to the lower side thereof. Further, it is also conceivable to set a controlling mode such that after one leading side blade lateral face 12 is ground with moving the cutter 10 and the first grindstone W1 in a predetermined direction relative to each other, an adjacent leading side blade lateral face 12 is ground with relatively moving the first grindstone W1 in the same direction.

After completion of grinding of all the leading side blade lateral faces 12, the grindstone setting section 37 sets the grindstone to its home position away from the cutter supporting section A. Under this condition, the grindstone selection controlling section 36 selects the second grindstone W2 as the grindstone needed for grinding and the grinding object controlling section 24 sets the rotational posture of the cutter 10 to its initial posture corresponding to grinding of the trailing side blade lateral face 12.

Under this set condition, after the grinding motor controlling section 26 initiates rotation of the second grindstone W2 by controlling the second grinding motor M2, the grindstone setting section 37 shifts the second grindstone W2 in the direction closer to the cutter 10. Further, simultaneously with this shifting, the grinding object controlling section 24 moves the cutter 10 in the direction of the rotational axis X and rotates the cutter 10 about the rotational axis X in synchronism therewith.

Fig. 8 shows roughly cut blade lateral faces 12 with two-dot chain lines and shows the blade lateral faces 12 ground by the first grindstone W1 and the second grindstone W2 with solid lines, respectively. Similarly, Fig. 9 shows the blade tip faces 13 ground by the third grindstone W3 with two-dot chain lines and shows the blade tip faces 13 ground by the third grindstone W3 with solid lines, respectively. For facilitating understanding, the amounts of grinding are shown with some exaggeration.

With the above operations, to the trailing side blade lateral face 12 of the cutter 10, the second grinding face Ws2 of the second grindstone W2 comes into contact as shown in Fig. 8, and grinding is effected under this contact condition on the region extending from one end portion to the other end portion in the blade trace direction. By the grinding of the trailing side blade lateral face 12 by the second grindstone W2, grinding substantially same as the first grindstone W1 is effected.

Further, when the blade thickness is to be adjusted, this blade thickness adjustment is realized by moving the grindstone relative to the roughly cut cutter 10 by an amount needed for the blade thickness adjustment about the rotational axis X in the circumferential direction, in either one of the leading side grinding by the first grindstone W1 and the trailing side grinding by the second grindstone W2.

After completion of grinding operations of all the trailing side blade lateral faces 12 as described above, similarly to the foregoing, with the grindstone being set to its home position away from the cutter supporting section A, the third grindstone W3 is selected as the grindstone needed for grinding and the rotational posture of the cutter 10 is set to the initial posture corresponding to grinding of the blade tip face 13.

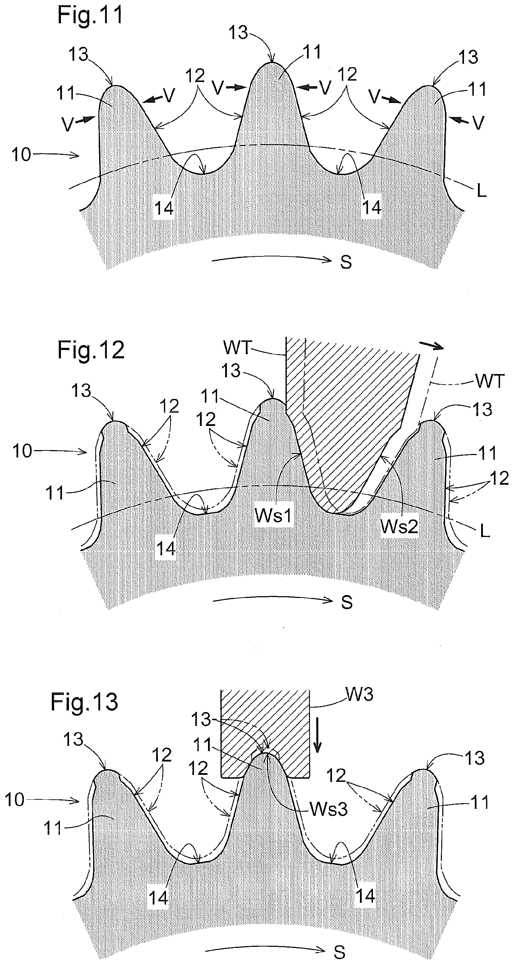

With implementation of grinding by a process similar to the foregoing under the above-described set condition, to the blade tip face 13 of the cutter 10, the third grinding face Ws3 of the third grindstone W3 comes into contact as shown in Fig. 10 and Fig. 11, thus realizing grinding of the entire region in the blade trace direction.

Especially, when the grinding is effected by the third grindstone W3, this grinding will be effected in such a manner as to form the blade tip face 13 gaplessly continuous with the leading side blade lateral face 12 formed by the grinding by the first grindstone W1 and the trailing side blade lateral face 12 formed by the grinding by the second grindstone W2.

When grinding operations are effected by the first grindstone W1, the second grindstone W2 and the third grindstone W3, wears will occur in the respective grindstones. Then, the controlling mode is set such that a truing is implemented by causing the diamond dresser 41 of the dressing section F to come into contact with the grinding face before the shape of the grinding face of the grindstone changes significantly from a desired shape due to such wear. And, the controlling mode is such that such truing is effected automatically when an accumulated period of grinding reaches a preset value.

When such truing is to be effected on the first grindstone W1, with the grindstone being maintained at the home position, the first grindstone W1 is rotated and to the first grinding face Ws1 under this rotated state, the diamond dresser 41 is caused to come into contact and the diamond dresser 41 is moved to copy a surface of the original first grinding face Ws1.

Such truing is effected similarly on the second grindstone W2 and the third grindstone W3 also. Incidentally, this truing results in decrease in the diameter of the grindstone, which decrease will influence the grinding because of an amount of displacement of the position of the grinding face associated therewith. In order to eliminate such influence, the grinding controlling section G provides a correction value for each grindstone after its truing and sets the grinding face at the appropriate position based on this correction value, for enabling appropriate grinding.

### [Function/Effect of Embodiment]

As described above, according to the inventive grinding method and the inventive grinding device for realizing such grinding method, it is possible to finish the shape of the leading side blade lateral face 12 by grinding with the first grindstone W1 and to finish the shape of the trailing side blade lateral face 12 by grinding with the second grindstone W2. In particular, since the leading side blade lateral face 12 is ground by the first grindstone W1 and the trailing side blade lateral face 12 is ground by the second grindstone W2 with the roughly cut cutter 10 being supported to the cutter supporting section A, these blade lateral faces 12 can be finished to required shapes even when these shapes 12 are non-symmetrical to each other.

Further, since the blade tip face 13 is formed gaplessly continuous with the leading side blade lateral face 12 formed by grinding with the first grindstone W1 and the trailing side blade lateral face 12 formed by grinding with the second grindstone W2, no stepped portion will be formed even at a boundary point V of the grinding region as shown in Fig. 11. With this, no stepped portion will be formed in the tooth face of the gear formed in the work 1 and no stress concentration will occur at the boundary portion between the blade lateral face 12 and the blade tip face 13 at the time of cutting, so that the service life of the cutter 10 is extended also.

In case the blade thickness of the cutting blade portion 11 is to be adjusted, through displacement in the circumferential direction of the first grindstone W1 or the second grindstone W2, blade thickness adjustment can be realized with a technique similar to that of lateral dislocation of a gear. Specifically, by increasing the grinding amount of the blade lateral face 12 with setting of the rotational angle of the cutter 10 about the rotational axis X, increase/decrease of the blade thickness of the cutting blade portion 11 is realized.

Incidentally, with the inventive grinding method of grinding a skiving-work cutter and the inventive grinding device for a skiving-work cutter, a stepped portion can sometimes be formed in the blade bottom face 14 by grinding with the first grindstone W1 and grinding with the second grindstone W2. However, as this blade bottom face 14 is located more on the center side of the rotational axis X than the boundary line L, this is not a region affecting grinding of the work 1, so that the tooth surface formed in the work 1 will be smooth. Further, as no stress concentration occurs in the blade bottom face 14 at the time of cutting, no deterioration occurs in the service life of the cutter 10, either.

### [Other Embodiments]

The present invention may be configured as follows, in addition to the embodiment described above, however embodiment (a) below, does not form part of the invention.
(a) As shown in Fig. 12 and Fig. 13, a "double-function" grindstone WT having the first grinding face Ws1 of the first grindstone W1 as well as the second grinding face Ws2 of the second grindstone W2 shown in the foregoing embodiment is employed for grinding the leading side blade lateral face 12 and the trailing side blade lateral face 12. Though not shown in the figure, this double-function grindstone WT is also configured as a disc type rotatable about an axis and the cutter 10 is supported to be rotatable about the rotational axis X similarly to the configuration shown in Fig. 3.

When grinding is effected by this double-function grindstone WT, as shown in Fig. 12, the first grinding face Ws1 is brought into contact with the leading side blade lateral face 12 for its grinding and thereafter the cutter 10 is rotated by a predetermined angle to bring the second grinding face Ws2 of the double-function grindstone WT into contact with the trailing side blade lateral face 12 for its grinding. With repetition of these grinding operations, the leading side blade lateral faces 12 and the trailing side blade lateral faces 12 of the plurality of cutting blade portions 11 can be finished to desired face shapes. Incidentally, Fig. 12 and Fig. 13 show the roughly cut blade lateral faces 12 with two-dot chain lines and the blade lateral faces 12 ground by the first grindstone W1 and the second grindstone W2 with solid lines, respectively.

Incidentally, in the case of effecting grinding with this double-function grindstone WT, when the grinding of the trailing side blade lateral face 12 is effected after grinding of the leading side blade lateral face 12, adjustment of blade thickness is made also possible by setting of the amount of relative rotation between the double-function grindstone WT and the cutter 10.

Thereafter, as shown in Fig. 13, as grinding is effected with placing the third grinding face Ws3 of the third grindstone W3 in contact with the blade tip face 13, there is formed the blade tip face 13 gaplessly continuous with the leading side blade lateral face 12 formed by the grinding with the first grindstone W1 and the trailing side blade lateral face 12 formed by the grinding with the second grindstone W2.

Especially, in this further embodiment (a) configuration, grinding of the region continuous from the blade lateral face 12 to the blade bottom face 14 is also possible. Thus, this region extending from the blade lateral face 12 to the blade bottom face 14 will be finished into a smooth arcuate shape, thus realizing improvement in the strength of the cutting blade portion 11. Further, in this configuration, in case grinding of the other blade lateral face 12 is to be effected after grinding of the one blade lateral face 12, the outer end portion of the double-function grindstone WT is moved in the circumferential direction as being kept in contact with the blade bottom face 14, so that no stepped portion will be formed in the blade bottom face 14 and the blade bottom face 14 will be formed smooth.
(b) As the means for grinding the blade tip face 13 of the cutting blade portion 11, it is also possible to employ a means rotated with placing the blade tip face 13 into contact with a buff which is being driven to rotate. In the case of grinding in the manner above, the buff impregnated with polishing agent can be brought into contact with the blade tip face 13. In this mode of grinding, as the vicinity of the blade tip face 13 is also ground at the time of grinding of this blade tip face 13, it is readily possible to minimize a stepped portion in the boundary portion between this blade tip face 13 and the blade lateral face 12. With this, grinding for forming the blade tip face 13 gaplessly continuous with the blade lateral face 12 can be effected easily.
(c) As the means for grinding the blade tip face 13 of the cutting blade portion 11, it is possible to employ a means effecting this by blasting shot peening material against the blade tip face 13, i.e. the so-called shot blast or shot peening technique. In the case of grinding with such means, as the shot peening material, it is possible to adjust the grinding amount through use of hard grains or setting of the grain size. Further, in this mode of grinding, at the time of grinding of the blade tip face 13, the vicinity of this blade tip face 13 is also ground. Thus, it is readily possible to minimize a stepped portion in the boundary portion between this blade tip face 13 and the blade lateral face 12. With this, grinding for forming the blade tip face 13 gaplessly continuous with the blade lateral face 12 can be effected easily.
(d) The mode of grinding can be set such that the grindstone is moved along the helically shaped groove portion 10A with the cutter 10 being maintained at a fixed position. With setting of the grinding mode in this manner too, the pair of blade lateral faces 12 and the blade tip face 13 can be shaped into desired shapes.
(e) The grinding device can be configured such that its grinding operational section E is arranged with the first grindstone W1, the second grindstone W2 and the third grindstone W3 being detachably mounted to an arm end of a single robot hand, so that the three kinds of grindstones may be selected one after another, as being enabled by this detachable mounting for effecting the grinding of the cutting blade portion 11 of the cutter 10. In particular, in the case of employing the configuration wherein the grindstones are supported to an arm end of a robot hand, grinding can be effected in such a mode that the grindstone are moved along the forming direction of the cutting blade portions 11 (blade trace direction) without effecting rotation or movement of the cutter 10. Thus, the rotational operational mechanism 21 and the linear operational mechanism 23 for the cutter supporting section A can be omitted.
(f) The grinding device can be configured with its grinding operational section E being arranged such that the movable base 32 is switchable with its movement along a rail-like guiding mechanism between a position closer to the cutter supporting section A and a position distant therefrom. Furthermore, it is possible to configure for allowing angle adjustment by tilting this movable base 32.
(g) The cutter 10 may be manufactured by forming helical groove portions 10A in a blank M obtained by cutting material. Then, a cutter manufacturing device can be configured by combining the cutting device with a grinding device for effecting grinding of blade lateral faces 12 and blade tip faces of the cutter 10 thus manufactured.

The present invention can be used for manufacturing of a skiving cutter.

## Claims

1. A method of grinding a skive-machining cutter (10) having a plurality of cutting blade portions (11) formed by forming a plurality of groove portions (10A) helically about a rotational axis (X) in an outer circumference of a material so that the plurality of cutting blade portions (11) are arranged at positions between respective adjacent pairs of the groove portions (10A) and radially about the rotational axis (X), the method comprising:
a first grinding step for grinding one of a pair of blade lateral faces (12) facing the groove portion (10A) with using a disc-like first grindstone (W1) having a grinding face having a shape along the one blade lateral face (12) and driven to rotate for the grinding operation;
a second grinding step for grinding the other of the pair of blade lateral faces (12) with using a disc-like second grindstone (W2) having a grinding face having a shape along the other blade lateral face (12) and driven to rotate for the grinding operation; and
a third grinding step for grinding a blade tip face (13) in a region extending from the pair of blade lateral faces (12) to a projecting side of the cutting blade portion (11); wherein
an order is set such that the third grinding step is effected after the first grinding step and the second grinding step; and
wherein in the third grinding step, a grinding operation is effected such that the blade tip face (13) formed by grinding is formed steplessly continuous with the one blade lateral face (12) formed by the first grinding step and the other blade lateral face (12) formed by the second grinding step.

2. The method of grinding a skive-machining cutter (10) according to claim 1, wherein the third grinding step employs a grindstone (W3) having a grinding face along the blade tip face (13) and driven to rotate for the grinding operation; and the blade tip face (13) formed by this third grindstone (W3) is formed continuous with the one blade lateral face (12) formed by the first grindstone (W1) and the other blade lateral face (12) formed by the second grindstone (W2).

3. The method of grinding a skive-machining cutter (10) according to claim 1 or 2, wherein the grinding operation of the blade lateral face (12) is effected by moving at least one of the first grindstone (W1) and the second grindstone (W2) toward a circumferential direction about the rotational axis (X) by an amount needed for adjustment of blade thickness.

4. The method of grinding a skive-machining cutter (10) according to claim 1, wherein in the third grinding step, the grinding operation is effected by buff or blast of shot peening material.

5. A device for grinding a skive-machining cutter (10) comprising:
a cutter supporting section (A) for a skive-machining cutter (10) having a plurality of cutting blade portions (11) formed by forming a plurality of groove portions (10A) helically about a rotational axis (X) in an outer circumference of a material so that the plurality of cutting blade portions (11) are arranged at positions between respective adjacent pairs of the groove portions (10A) and radially about the rotational axis (X);
a first grinding section (B) for grinding one of a pair of blade lateral faces (12) facing the groove portion (10A) with using a disc-like first grindstone (W1) having a grinding face having a shape along the one blade lateral face (12) and driven to rotate for the grinding operation;
a second grinding section (C) for grinding the other of the pair of blade lateral faces (12) with using a disc-like second grindstone (W2) having a grinding face having a shape along the other blade lateral face (12) and driven to rotate for the grinding operation; and
a third grinding section (D) for grinding a blade tip face (13) in a region extending from the pair of blade lateral faces (12) to a projecting side of the cutting blade portion (11); and
a controlling section (G) adapted to control the device such that grinding operations by driving rotations of the first grindstone (W1) of the first grinding section (B) and the second grindstone (W2) of the second grinding section (C) are effected on the skive-machining cutter (10) supported to the cutter supporting section (A) and then a grinding operation is effected by the third grinding section (D) for forming the blade tip face (13) steplessly continuous with the one blade lateral face (12) formed by the first grinding step and the other blade lateral face (12) formed by the second grinding step.

## Patentansprüche

1. Verfahren zum Schleifen eines Schälbearbeitungsschneidwerkzeugs (10), das eine Mehrzahl Schneidklingenabschnitte (11) aufweist, die durch Ausbildung einer Mehrzahl von Nutabschnitten (10A) schneckenförmig um eine Drehachse (X) in einem äußeren Umfang eines Materials ausgebildet sind, sodass die Mehrzahl der Schneidklingenabschnitte (11) an Positionen zwischen entsprechenden angrenzenden Paaren der Nutabschnitte (10A) und radial um die Drehachse (X) herum angeordnet sind, wobei das Verfahren umfasst:
einen ersten Schleifschritt zum Schleifen von einer eines Paars der Klingenseitenflächen (12), die zu dem Nutabschnitt (10A) gerichtet sind, unter Verwendung einer scheibenartigen ersten Schleifscheibe (W1), die eine Schleiffläche aufweist, die eine Form entlang der einen Klingenseitenfläche (12) aufweist, und die angetrieben ist, um sich für den Schleifvorgang zu drehen;
einen zweiten Schleifschritt zum Schleifen des anderen des Paars der Klingenseitenflächen (12) unter Verwendung einer scheibenartigen zweiten Schleifscheibe (W2), die eine Schleiffläche aufweist, die eine Form entlang der anderen Klingenseitenfläche (12) aufweist, und angetrieben ist, um für den Schleifvorgang zu drehen; und
einen dritten Schleifschritt zum Schleifen einer Klingenspitzenfläche (13) in einem Bereich, der sich von dem Paar der Klingenseitenflächen (12) zu einer vorragenden Seite des Schneidklingenabschnitts (11) erstreckt;
wobei
eine Reihenfolge derart eingestellt ist, dass der dritte Schleifschritt nach dem ersten Schleifschritt und dem zweiten Schleifschritt bewirkt wird; und
wobei in dem dritten Schleifschritt ein Schleifvorgang derart bewirkt wird, dass die Klingenspitzenfläche (13), die durch das Schleifen ausgebildet wird, stufenlos kontinuierlich mit der einen Klingenseitenfläche (12) ausgebildet wird, die durch den ersten Schleifschritt ausgebildet wird, und der anderen Klingenseitenfläche (12), die durch den zweiten Schleifschritt ausgebildet wird.

2. Verfahren zum Schleifen eines Schälbearbeitungsschneidwerkzeugs (10) nach Anspruch 1, wobei der dritte Schleifschritt eine Schleifscheibe (W3) einsetzt, die eine Schleiffläche entlang der Klingenspitzenfläche (13) aufweist und die angetrieben ist, um für den Schleifvorgang zu drehen; und die Klingenspitzenfläche (13), die durch diese dritte Schleifscheibe (W3) ausgebildet wird, kontinuierlich mit der einen Klingenseitenfläche (12) ausgebildet ist, die durch die erste Schleifscheibe (W1) ausgebildet wird, und der anderen Klingenseitenfläche (12), die durch die zweite Schleifscheibe (W2) ausgebildet wird.

3. Verfahren zum Schleifen eines Schälbearbeitungsschneidwerkzeugs (10) nach Anspruch 1 oder 2, wobei der Schleifvorgang der Klingenseitenfläche (12) durch Bewegen von zumindest von einem aus der ersten Schleifscheibe (W1) und der zweiten Schleifscheibe (W2) zu einer Umfangsrichtung um die Drehachse (X) um eine Größe bewirkt wird, die zum Einstellen der Klingendicke benötigt wird.

4. Verfahren zum Schleifen eines Schälbearbeitungsschneidwerkzeugs (10) nach Anspruch 1, wobei in dem dritten Schleifschritt der Schleifvorgang durch Polieren oder Luftstrahlen eines Kugelstrahlmaterials bewirkt wird.

5. Gerät zum Schleifen eines Schälbearbeitungsschneidwerkzeugs (10) mit:
einem Schneidwerkzeugstützabschnitt (A) für ein Schälbearbeitungsschneidwerkzeug (10), das eine Mehrzahl Schneidklingenabschnitte (11) aufweist, durch Ausbilden einer Mehrzahl von Nutabschnitten (10A) schneckenförmig um eine Drehachse (X) in einem äußeren Umfang eines Materials ausgebildet sind, sodass die Mehrzahl der Schneidklingenabschnitte (11) an Positionen zwischen entsprechenden angrenzenden Paaren der Nutabschnitte (10A) und radial um die Drehachse (X) herum angeordnet sind;
einem ersten Schleifabschnitt (B) zum Schleifen von einer eines Paars von Klingenseitenflächen (12), die zu dem Nutabschnitt (10A) gerichtet sind, unter Verwendung einer scheibenartigen ersten Schleifscheibe (W1), die eine Schleiffläche aufweist, die eine Form entlang der einen Klingenseitenfläche (12) aufweist, und angetrieben ist, um für den Schleifvorgang zu drehen;
einem zweiten Schleifabschnitt (C) zum Schleifen des anderen des Paars der Klingenseitenflächen (12) unter Verwendung einer scheibenartigen zweiten Schleifscheibe (W2), die eine Schleiffläche aufweist, die eine Form entlang der anderen Klingenseitenfläche (12) aufweist, und angetrieben ist, um für den Schleifvorgang zu drehen; und
einem dritten Schleifabschnitt (D) zum Schleifen einer Klingenspitzenfläche (13) in einem Bereich, der sich von dem Paar der Klingenseitenflächen (12) zu einer vorragenden Seite des Schneidklingenabschnitts (11) erstreckt; und
einem Steuerabschnitt (G), der angepasst ist, das Gerät derart zu steuern, dass Schleifvorgänge durch Antreiben von Drehungen der ersten Schleifscheibe (W1) des ersten Schleifabschnitts (B) und der zweiten Schleifscheibe (W2) des zweiten Schleifabschnitts (C) auf dem Schälbearbeitungsschneidwerkzeug (10) bewirkt werden, das durch den Schneidwerkzeugstützabschnitt (A) gestützt ist, und dann ein Schleifvorgang durch den dritten Schleifabschnitt (D) zum Ausbilden der Klingenspitzenfläche (13) stufenlos kontinuierlich mit der einen Klingenseitenfläche (12), die durch den ersten Schleifschritt geformt ist, und der anderen Klingenseitenfläche (12), die durch den zweiten Schleifschritt geformt ist, bewirkt wird.

## Revendications

1. Procédé de meulage d'une fraiseuse (10) ayant une pluralité de portions de lame de coupe (11) formées par formation d'une pluralité de portions de rainure (10A) hélicoïdalement autour d'un axe de rotation (X) dans une circonférence extérieure d'un matériau de sorte que la pluralité de portions de lame de coupe (11) sont agencées à des positions entre des paires adjacentes respectives des portions de rainure (10A) et radialement autour de l'axe de rotation (X), le procédé comprenant :
une première étape de meulage pour le meulage d'une d'une paire de faces latérales de lame (12) faisant face à la portion de rainure (10A) avec utilisation d'une première meule en forme de disque (W1) ayant une face de meulage ayant une forme le long de l'une face latérale de lame (12) et entraînée pour tourner pour l'opération de meulage ;
une deuxième étape de meulage pour le meulage de l'autre de la paire de faces latérales de lame (12) avec utilisation d'une deuxième meule en forme de disque (W2) ayant une face de meulage ayant une forme le long de l'autre face latérale de lame (12) et entraînée pour tourner pour l'opération de meulage ; et
une troisième étape de meulage pour le meulage d'une face de pointe de lame (13) dans une région s'étendant de la paire de faces latérales de lame (12) à un côté en saillie de la portion de lame de coupe (11) ;
dans lequel un ordre est réglé de sorte que la troisième étape de meulage est effectuée après la première étape de meulage et la deuxième étape de meulage ; et
dans lequel dans la troisième étape de meulage, une opération de meulage est effectuée de sorte que la face de pointe de lame (13) formée par meulage est formée en continu sans palier avec l'une face latérale de lame (12) formée par la première étape de meulage et l'autre face latérale de lame (12) formée par la deuxième étape de meulage.

2. Procédé de meulage d'une fraiseuse (10) selon la revendication 1, dans lequel la troisième étape de meulage emploie une meule (W3) ayant une face de meulage le long de la face de pointe de lame (13) et entraînée pour tourner pour l'opération de meulage ; et la face de pointe de meule (13) formée par cette troisième meule (W3) est formée en continu avec l'une face latérale de lame (12) formée par la première meule (W1) et l'autre face latérale de lame (12) formée par la deuxième meule (W2).

3. Procédé de meulage d'une fraiseuse (10) selon la revendication 1 ou 2, dans lequel l'opération de meulage de la face latérale de lame (12) est effectuée par déplacement d'au moins une de la première meule (W1) et de la deuxième meule (W2) vers une direction circonférentielle autour de l'axe de rotation (X) d'une quantité nécessaire pour l'ajustement de l'épaisseur de lame.

4. Procédé de meulage d'une fraiseuse (10) selon la revendication 1, dans lequel dans la troisième étape de meulage, l'opération de meulage est effectuée par ponçage ou soufflage de matériau de grenaillage.

5. Dispositif de meulage d'une fraiseuse (10) comprenant :
une section de support de couteau (A) pour une fraiseuse (10) ayant une pluralité de portions de lame de coupe (11) formées par formation d'une pluralité de portions de rainure (10A) hélicoïdalement autour d'un axe de rotation (X) dans une circonférence extérieure d'un matériau de sorte que la pluralité de portions de lame de coupe (11) sont agencées à des positions entre des paires adjacentes respectives des portions de rainure (10A) et radialement autour de l'axe de rotation (X) ;
une première section de meulage (B) pour le meulage d'une d'une paire de faces latérales de lame (12) faisant face à la portion de rainure (10A) avec utilisation d'une première meule en forme de disque (W1) ayant une face de meulage ayant une forme le long de l'une face latérale de lame (12) et entraînée pour tourner pour l'opération de meulage ;
une deuxième section de meulage (C) pour le meulage de l'autre de la paire de faces latérales de lame (12) avec utilisation d'une deuxième meule en forme de disque (W2) ayant une face de meulage ayant une forme le long de l'autre face latérale de lame (12) et entraînée pour tourner pour l'opération de meulage ; et
une troisième section de meulage (D) pour le meulage d'une face de pointe de lame (13) dans une région s'étendant de la paire de faces latérales de lame (12) à un côté en saillie de la portion de lame de coupe (11) ; et
une section de commande (G) adaptée pour commander le dispositif de sorte que des opérations de meulage par entraînement de rotations de la première meule (W1) de la première section de meulage (B) et de la deuxième meule (W2) de la deuxième section de meulage (C) sont effectuées sur la fraiseuse (10) supportée sur la section de support de couteau (A) et ensuite une opération de meulage est effectuée par la troisième section de meulage (D) pour formation de la face de pointe de lame (13) en continu sans palier avec l'une face latérale de lame (12) formée par la première étape de meulage et l'autre face latérale de lame (12) formée par la deuxième étape de meulage.
